# EUROPEAN PATENT SPECIFICATION

(11) **EP 1 978 049 B1**
(45) Date of publication and mention of the grant of the patent: **24.02.2010**
(21) Application number: 07105538.8
(22) Date of filing: 03.04.2007
(51) Int. Cl.: C08G 59/22, C08G 59/42, C08G 59/62, H01B 3/40

(54) **Curable Epoxy Resin Composition**
Härtbare Epoxidharzzusammensetzung
Composition de résine époxy durcissable

(43) Date of publication of application: 08.10.2008
(73) Proprietor: ABB Research Ltd, 8050 Zürich (CH)
(72) Inventor: Schaal, Stéphane, F-67640 Lipsheim (FR); Gonzalez, Patricia, E-50012 Zaragoza (ES); Ghoul, Cherif, F-68200 Mulhouse (FR); Rocks, Jens, CH-8807 Freienbach (CH); Arauzo, Francisco, E-50009 Zaragoza (ES); Meier, Patrick, CH-5603 Staufen (CH)
(74) Representative: ABB Patent Attorneys

(56) References cited:
- EP-A1- 1 491 566
- WO-A-99/43729
- US-A- 3 868 613
- US-A- 4 665 111
- US-A- 6 030 713

## Description

The present invention relates to a curable epoxy resin composition, a process of making said composition, and electrical articles containing an electrical insulation system made from said composition.

Cured epoxy resin compositions include a broad class of polymeric materials having a wide range of physical properties. The large spectrum of properties available with cured epoxy resin compositions, have made them particularly useful in electrical and electronic applications, such as insulating materials in the manufacture of transformers, switchgears, circuit breakers in medium and high voltage applications. Compared to other insulating materials, cured epoxy resin compositions exhibit excellent mechanical and electrical properties, temperature and long-term creep stability, chemical resistance, and are cost-effective.

Epoxy resins are polyepoxide monomers or polymers containing generally two or more epoxide groups per molecule which generally are cured by reaction with hardeners (also known as curing agents). The prime function of the hardener is to react with the epoxide groups within the mixture to propagate the crosslinking of the resin. Epoxy resins compositions further may contain catalysts (also named accelerators) to catalyze such crosslinking reaction, as well as additives such as fillers, plasticizing agents (flexibilizers), stabilizers and other ingredients.

Cured epoxy resin compositions must have defined performance properties, especially a good thermal and chemical stability at high operating temperatures as well as good mechanical properties, especially also a good resistance to thermal shock. However, cured epoxy resin compositions having good thermal and chemical stability at high operating temperatures are generally rather brittle and therefore have a rather poor resistance to thermal shocks, i.e. have a rather low crack resistance. One known way to improve the crack resistance of epoxies is the addition of a plasticizing agent to the curable epoxy resin composition, as disclosed e.g. in US 4,587,452. However, the addition of a plasticizing agent usually leads to a decrease of the mechanical properties, e.g. in tension and bending. It also leads to a lower glass transition temperature (Tg), which is an important parameter when considering the temperature at which a device is allowed to operate safely. For structural applications for example, it is indicated that the operating temperature should be at least 30°K below the Tg of the material. Lowering the Tg of the material means therefore lowering its operating temperature.

There is a need for a material, based on epoxy technology, that has good thermal and chemical stability at high operating temperatures as well as an improved resistance to thermal shock, while maintaining the Tg and the mechanical properties as high as possible, and also allowing the use of the current known processing techniques.

Suitable processing techniques include the Automatic Pressure Gelation (APG) Process and the Vacuum Casting Process. In the latter the solventless, liquid epoxy resin composition is poured into a mold and cured to a solid shaped article at elevated temperature. Afterwards the demolded part is usually post-cured at elevated temperatures to complete the curing reaction and to obtain a hardened resin with the ultimate desired properties.

It has now been found that a selected curable epoxy resin composition comprising a selected combination of at least a diglycidyl ether of bisphenol A (DGEBA) and at least a diglycidyl ether of bisphenol F (DGEBF) as epoxy resins, an anhydride hardener, and at least one plasticizer, yields a cured resin composition that has excellent thermal and chemical stability at high operating temperatures and shows a significantly improved resistance to thermal shock, while maintaining the Tg, combined with significantly improved mechanical properties of the composition, compared to known compositions. It further allows the use of current processing techniques.

Using a diol plasticizer, wherein said plasticizer preferably is solid at room temperature, leads generally to an increase of the viscosity of the curable epoxy resin composition, so that the viscosity of the composition may need to be adjusted to be within the range of a dynamic complex viscosity value (η*) within the range of 0.1 to 20 Pa.s. This can easily be done by increasing the amount of DGEBF relative to the amount of DGEBA present and represents no problem to the person skilled in the art.

Said composition is preferably cured at elevated temperatures, preferably within the range of 80°C-160°C, preferably from 100-160°C, yielding a cured epoxy resin composition having surprisingly good properties if compared with other known curable epoxy resin compositions, e.g. when compared with compositions of EP 1 491 566, where curable epoxy resin compositions are described based on diglycidyl ethers of bisphenol A (DGEBA).

With the composition of the present invention it is possible to produce cured epoxy resin compositions as structural composites with improved physical and mechanical properties which have special advantages for the encapsulation of electrical devices, preferably for the use as cast coils for dry type distribution transformers, especially vacuum cast dry distribution transformers, which within the resin structure contain electrical conductors.

The present invention is defined in the claims. The present invention refers to a curable epoxy resin composition, characterized in that said composition comprises:
(i) at least one diglycidyl ether of bisphenol A (DGEBA) and at least one diglycidyl ethers of bisphenol F (DGEBF) as epoxy resins, wherein the weight ratio of DGEBA : DGEBF is within the range of about 15:85 to 45:55;
(ii) an anhydride hardener;
(iii) at least one plasticizerbeing a diol, preferably a diol which is solid at room temperature;
(iv) optionally a catalyst, at least one filler material and/or further additives; and
wherein the dynamic complex viscosity value (η*) of said composition is within the range of 0.1 to 20 Pa.s, measured at 75°C, 50% strain and 1 hz.

Preferably the weight ratio of DGEBA : DGEBF is within the range of about 20:80 to 40:60; preferably 25:75 to 35:65.

Diglycidyl ether of bisphenol A (DGEBA) corresponds to the following chemical formula:

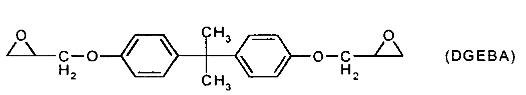

Diglycidyl ether of bisphenol F (DGEBF), as p,p'-bisglycidyl-oxyphenylmethane, is represented by the chemical formula:

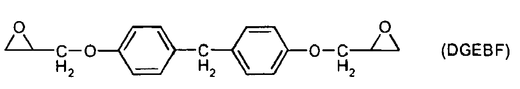

When producing diglycidyl ether of bisphenol F (DGEBF), however, there is generally obtained a mixture of isomeric compounds such as a mixture of o,o'-, o,p'- and p,p'-bis-glycidyloxyphenylmethane.

Suitable anhydride hardeners as curing agents include, but are not limited to, maleic anhydride; methyltetrahydrophtalic anhydride; methyl-4-endomethylene tetrahydrophtalic anhydride; hexahydrophtalic anhydride; tetrahydrophtalic anhydride; dodecenyl succinic anhydride. A preferred anhydride hardener is methyltetrahydrophtalic anhydride (MTHPA).

The stoichiometry of anhydride hardener may vary from a molar defect to a molar excess of the anhydride with respect to the sum of the epoxide groups present, i.e. calculated to the epoxide groups of the sum of the DGEBA and DGEBF present. Preferred is a molar ratio of the anhydride groups from 90% to 110%, preferably from 98% to 102%, calculated to the epoxide groups, as it is known to those skilled in the art. When used to cure the mixture of DGEBA and DGEBF, the anhydride hardener, for example the methyltetrahyrophtalic anhydride (MTHPA), is typically present in an amount of from 40% to 120% by weight [also named as parts per hundred (phr)], calculated to the weight of the sum of DGEBA and DGEBF, preferably from 50% to 90% by weight, and preferably about 70% by weight, calculated to the weight of the sum of DGEBA and DGEBF.

The composition according to the present invention contains at least one plasticizerbeing a diol, preferably a diol which is solid at room-temperature. Said plasticizer substantially functions as a flexibilizer. Suitable diols include aromatic diols such as bisphenol A, bisphenol F, aliphatic monomeric or polymeric diols such as polyethylene glycols (PEG) or polypropylene glycols (PPG), or neopentyl glycol. Preferred are bisphenol A, bisphenol F and neopentyl glycol or a mixture of these compounds. Most preferred are neopentyl glycol and bisphenol A or a mixture of these compounds. According to the invention, the plasticizer is used in an amount of from 5% to 50% by weight, calculated to the weight of the sum of DGEBA and DGEBF, preferably from 10% to 45% by weight, calculated to the weight of the sum of DGEBA and DGEBF. When both an aromatic and an aliphatic diol are used, their weight ratio may vary from 80:20 to 20:80.

Many suitable catalysts which optionally may be present in the composition are known for catalyzing the curing reaction of the epoxy resin with the hardener. The catalyst preferably is a 1-substituted imidazole and/or N,N-dimethylbenzylamine.

Suitable 1-substituted imidazole catalysts for the curing step are 1-alkyl imidazoles which may or may not be substituted also in the 2-position, such as 1-methyl imidazole or 1-isopropyl-2-methyl imidazole. A further suitable catalyst is N,N-dimethylbenzylamine. Preferred is 1-methyl imidazole.

The optional catalyst is preferably used in amounts of less than 5% by weight, calculated to the total weight of DGEBA and DGEBF, preferably within the range of 0.01% to 2.5% by weight, calculated to the total weight of DGEBA and DGEBF, and most preferably within the range of 0.05% to 1% by weight, calculated to the total weight of DGEBA and DGEBF.

The dynamic complex viscosity value (η*) of the composition according to the present invention is preferably within the range of from 0.1 to 20 Pa.s, preferably from 0.2 to 10 Pa.s, preferably from 0.5 to 2.0 Pa.s, and most preferably at about 1.0 Pa.s. The dynamic complex viscosity value (η*) given in Pa.s is measured at 75°C, 50% strain and 1 hz.

Generally the cure time is within the range of 4 hours to 10 hours, and within a temperature range of from about 100°C to 170°C, preferably at a temperature of about 130°C, for obtaining optimum physical properties.

According to an embodiment of the present invention the insulator system contains at least one filler material or a mixture of such filler materials. Filler materials for electrical isolation systems are known per se. Fillers are preferably selected from the group comprising natural purified sands; silicon oxides and silicon hydroxides; aluminum oxides and aluminum hydroxides; titanium oxides and titanium hydroxides; zinc oxides and hydroxides; silicates, preferably sodium/potassium silicates, silicon aluminosilicates; mineral carbonates, preferably calcium-magnesium carbonate or calcium-silicon-magnesium carbonates; geopolymers, preferably trolites and/or zeolites based on aluminosilicates or other alkaline earth metals, glasses, mica, ceramic particles. Preferred are silicon oxides, aluminum oxides, titanium oxides, silicates, preferably silicon oxides (SiO₂, Quarz), aluminum oxides and hydroxides, zinc oxide, sodium/potassium silicates and/or silicon aluminosilicates; The filler may be surface treated, e.g. silanized, or untreated or be mixture thereof.

The mineral filler compound or the mixture of such compounds have a preferred average grain size (at least 50% of the grains) in the range of from about 1.0 µm to 2000 µm, preferably in the range of from 5 µm to 500 µm, preferably in the range of from 5 µm to 100 µm.

Filler loading in the composition can vary within a broad range, depending on the final application of the resin. Loading can be of from about 50% to about 80% by weight, calculated to the total weight of the insulation composition, preferably of from about 55% to about 75% by weight, preferably of from about 60% to about 70% by weight, calculated to the total weight of the insulation composition.

The curable epoxy resin composition of the invention may contain other additives, such as hydrophobic compounds, preferably a polysiloxane or a mixture of polysiloxanes; elastomers; pigments, dyes or stabilizers.

Suitable hydrophobic compound or a mixture of such compounds, especially for improving the self-healing properties of the electrical insulator may be selected from the group comprising flowable fluorinated or chlorinated hydrocarbons which contain -CH₂-units, -CHF-units, -CF₂-units, -CF₃-units, -CHCl-units, -C(Cl)₂-units, -C(Cl)₃-units, or mixtures thereof; or a cyclic, linear or branched flowable organopolysiloxane. Said hydrophobic compound or said mixture of said compounds may be present in encapsulated form.

The hydrophobic compound preferably has a viscosity in the range from 50 cSt to 10,000 cSt, preferably in the range from 100 cSt to 10,000 cSt, preferably in the range from 500 cSt to 3000 cSt, measured in accordance with DIN 53 019 at 20°C.

Suitable polysiloxanes are known and may be linear, branched resp. cross-linked or cyclic. Preferably the polysiloxanes are composed of -[Si(R)(R)O]-groups, wherein R independently of each other is an unsubstituted or substituted, preferably fluorinated, alkyl radical having from 1 to 4 carbon atoms, or phenyl, preferably methyl, and wherein said substituent R may carry reactive groups, such as hydroxyl or epoxy groups. Non-cyclic siloxane compounds preferably on average have about from 20 to 5000, preferably 50-2000, -[Si(R)(R)O]-groups. Preferred cyclic siloxane compounds are those comprising 4-12, and preferably 4-8, -[Si(R) (R)O]-units.

The hydrophobic compound is added to the epoxide resin preferably in an amount of from 0.1% to 10%, preferably in an amount of from 0.25% to 5% by weight, preferably in an amount of from 0.25% to 3% by weight, calculated to the weight of the sum of DGEBA and DGEBF.

Preferred elastomers are natural rubber, butyl rubber, polyisoprene, polybutadiene, polyisobutylene, ethylene-propylene copolymer, styrene-butadiene-styrene copolymer, styreneisoprene-styrene copolymer and/or ethylene-propylene copolymer. These additives may be added provided viscosity values do not become too high. Pigments, dyes and stabilizers to optionally be added are known per se.

Suitable processes for making the cured epoxy resin compositions of the invention are the APG Process and the Vacuum Casting Process. As mentioned above, such processes typically include a curing step in the mold for a time sufficient to shape the epoxy resin composition into its final infusible three dimensional structure, typically up to ten hours, and a post-curing step of the demolded article at elevated temperature to develop the ultimate physical and mechanical properties of the cured epoxy resin composition. Such a post-curing step may take, depending on the shape and size of the article, up to thirty hours.

A process for making shaped articles using a composition according to the present invention comprises the steps of:
(a) preheating a curable liquid epoxy resin composition comprising (i) at least one diglycidyl ether of bisphenol A (DGEBA) and at least one diglycidyl ethers of bisphenol F (DGEBF) as epoxy resins, wherein the weight ratio of DGEBA : DGEBF is within the range of about 15:85 to 45:55; (ii) an anhydride hardener; (iii) at least one plasticizer, preferably a diol, preferably a diol which is solid at room temperature; and (iv) optionally a catalyst, at least one filler material and/or further additives; and wherein the dynamic complex viscosity value (η*) of said composition is within the range of 0.1 to 20 Pa.s;
(b) transferring said composition into a pre-heated mold;
(c) curing said composition at elevated temperature for a time sufficient to obtain a shaped article with an infusible cross-linked structure; and
(d) optionally post curing the obtained shaped article for about ten hours at a temperature of about 140°C.

Preferred compositions are for example:

| Components: | Parts by weight: | % by weight: |
|---|---|---|
| DGEBA + DGEBF | 100 | 7.4 - 33.3 |
| Hardener | 40 - 120 | 2.9 - 40 |
| Catalyst | 0.01 - 5.0 | 0.04 - 1.7 |
| Plasticizer | 10 -45 | 0.4 - 15 |
| Filler | 150 - 1080 | 50 - 80 |
| Optional additives | 0 - 20 | ad 100 |

Preferred uses of the insulation systems produced according to the present invention are dry-type transformers, particularly cast coils for dry type distribution transformers, especially vacuum cast dry distribution transformers, which within the resin structure contain electrical conductors; high-voltage insulations for indoor use, like breakers or switchgear applications; as long-rod, composite and cap-type insulators, and also for base insulators in the medium-voltage sector, in the production of insulators associated with outdoor power switches, measuring transducers, leadthroughs, and overvoltage protectors, in switchgear constructions, in power switches, and electrical machines, as coating materials for Transistors and other semiconductor elements and/or to impregnate electrical components.

The present invention further refers to the electrical articles containing an electrical insulation system according to the present invention. The following examples illustrate the invention. In the examples below the invention is illustrated with reference to a Vacuum Casting Process, but they are not to be construed as to limiting the scope thereof in any manner.

### Examples 1 and Comparative Example

- Glass Transition Temperature, Tg (°C) was measured by the procedure according to ISO 11357-2.
- Flexural properties were determined by the 3 points Bending Test to according ISO 178.

A curable epoxy resin composition according to the invention (Example 1) and one comparison composition according to the prior art (Comparative Example according to EP 1 491 566) were prepared with a composition as set forth in Table 1 below. The components of the composition are expressed in parts by weight.

**Table 1 (compositions)**

| Components | Comparative Example | Example 1 |
|---|---|---|
| DGEBA | 100 | 25 |
| DGEBF | -.- | 75 |
| MTHPA | 70 | 70 |
| NPG | 12 | 12 |
| Catalyst | 1.0 | 1.0 |
| Silica W12 | 320 | 320 |

| | | |
|---|---|---|
| DGEBA= diglycidylether of bisphenol A DGEBF = diglycidylether of bisphenol F MTHPA= methytetrahydrophtalic anhydride (hardener) NPG = neopentylglycol (flexibilizer) Catalyst = 1-methylimidazole Silica W12, supplied by Quarzwerke Frechen | | |

### Sample preparation and test conditions

The silica filler was dried overnight at 160°C and cooled down to 65°C. Each component (resin, hardener, flexibilizer) was preheated separately to 65°C. The mixing was carried out in small aluminum buckets with an overhead stirrer. Degassing was performed at 65°C and 1 hPa before and after casting. Plates were vacuum cast (4 mm thickness) and subsequently cured for eight hours at 140°C. Test specimen were prepared according to the respective standards specifications. Results are listed in Table 2.

**Table 2 (properties)**

| | | |
|---|---|---|
| | Comparative Example | Example 1 |
| | | |
| Thermal properties: Tg | 91°C | 89°C |
| | | |
| Flexural properties: | | |
| Strength | 133.0 MPa | 143.5 MPa |
| Deformation at break | 1.48% | 1.65% |

### Discussion:

With the composition of Example 1, which differs from the Comparative Example only with the replacement of DGEBA by a combination of DGEBA and DGEBF, flexural properties are surprisingly improved and the Tg is retained. Similar results are obtained without adding a 1-methylimidazole catalyst.

## Claims

1. Curable epoxy resin composition, **characterized in that** said composition comprises:
(i) at least one diglycidyl ether of bisphenol A (DGEBA) and at least one diglycidyl ethers of bisphenol F (DGEBF) as epoxy resins, wherein the weight ratio of DGEBA : DGEBF is within the range of about 15:85 to 45:55;
(ii) an anhydride hardener;
(iii) at least one plasticizer, said plastiziser being a diol, preferably a diol which is solid at room temperature;
(iv) optionally a catalyst, at least one filler material and/or further additives; and
wherein the dynamic complex viscosity value (η^{*}) of said composition is within the range of 0.1 to 20 Pa.s, measured at 75°C, 50% strain and 1 hz.

2. Composition according to claim 1, **characterized in that** the weight ratio of DGEBA : DGEBF is within the range of 20:80 to 40:60; preferably within the range of 25:75 to 35:65.

3. Composition according to claim 1 or 2, **characterized in that** the anhydride hardeners is selected from the group comprising maleic anhydride; methyltetrahydrophtalic anhydride; methyl-4-endomethylene tetrahydrophtalic anhydride; hexahydrophtalic anhydride; tetrahydrophtalic anhydride; dodecenyl succinic anhydride and preferably is methyltetrahydrophtalic anhydride (MTHPA).

4. Composition according to any one of the claims 1-3, **characterized in that** the plasticiser is selected from the group comprising aromatic diols and aliphatic monomeric or polymeric diols, preferably from bisphenol A, bisphenol F, polyethylene glycols, polypropylene glycols and neopentyl glycol, preferably from bisphenol A, bisphenol F and neopentyl glycol or a mixture of these compounds, preferably from neopentyl glycol and bisphenol A or a mixture of these compounds.

5. Composition according to claim 4, **characterized in that** plasticizer is used in an amount of from 5% to 50% by weight, preferably from 10% to 45% by weight, calculated to the weight of the sum of DGEBA and DGEBF.

6. Composition according to claim 4 or 5, **characterized in that** an aromatic and an aliphatic diol are used, wherein their weight ratio is within the range of 80:20 to 20:80.

7. Composition according to any one of the claims 1-6, **characterized in that** the catalyst is a 1-substituted imidazole and/or N,N-dimethylbenzylamine, preferably a 1-alkyl imidazole which optionally is substituted in the 2-position, preferably 1-methyl imidazole or 1-isopropyl-2-methyl imidazole and/or 1-methyl imidazole.

8. Composition according to any one of the claims 1-7, **characterized in that** the optional catalyst is present in an amount of less than 5% by weight, preferably within the range of 0.01% to 2.5% by weight, and preferably within the range of 0.05% to 1% by weight, calculated to the total weight of DGEBA and DGEBF.

9. Composition according to any one of the claims 1-8, **characterized in that** the dynamic complex viscosity value (η^{*}) of the composition is within the range of from 0.2 to 10 Pa.s, preferably from 0.5 to 2.0 Pa.s, and preferably about 1.0 Pa.s, measured at 75°C, 50% strain and 1 hz.

10. Composition according to any one of the claims 1-9, **characterized in that** the filler is a mineral filler, preferably selected from silicon oxides, aluminum oxides, titanium oxides, silicates, preferably silicon oxides (SiO₂, Quarz), aluminum oxides and hydroxides, zinc oxide, sodium/potassium silicates and/or silicon aluminosilicates; wherein said filler optionally is surface treated.

11. Composition according to claim 10, **characterized in that** the filler compound or the mixture of such compounds have an average grain size (at least 50% of the grains) in the range of from 1.0µm to 2000µm, preferably in the range of from 5µm to 500µm, preferably in the range of from 5µm to 100µm; and are present in an amount of 50% to 80% by weight, preferably of from about 55% to about 75% by weight, preferably of from about 60% to about 70% by weight, calculated to the total weight of the insulation composition.

12. Composition according to any one of the claims 1-11, **characterized in that** said composition contains further additives, preferably hydrophobic compounds, preferably a polysiloxane or a mixture of polysiloxanes; elastomers; pigments, dyes or stabilizers.

13. Composition according to any one of the claims 1-11, **characterized in that** said composition contains:
| Components: | Parts by weight: | % by weight: |
|---|---|---|
| DGEBA + DGEBF | 100 | 7.4 - 33.3 |
| Hardener | 40 - 120 | 2.9 - 40 |
| Catalyst | 0.01 - 5 | 0.04 - 1.7 |
| Plasticizer | 10 - 45 | 0.4 - 15 |
| Filler | 150 - 1080 | 50 - 80 |
| Optional additives | 0 - 20 | ad 100 |

14. A process for making a shaped article using a composition according to any one of the claims 1-13, comprising the steps of:
(a) preheating a curable liquid epoxy resin composition comprising (i) at least one diglycidyl ether of bisphenol A (DGEBA) and at least one diglycidyl ethers of bisphenol F (DGEBF) as epoxy resins, wherein the weight ratio of DGEBA : DGEBF is within the range of about 15:85 to 45:55; (ii) an anhydride hardener; (iii) at least one plasticizer, preferably a diol, preferably a diol which is solid at room temperature; and (iv) optionally a catalyst, at least one filler material and/or further additives; and wherein the dynamic complex viscosity value (η^{*}) of said composition is within the range of 0.1 to 20 Pa.s, measured at 75°C, 50% strain and 1 hz;
(b) transferring said composition into a pre-heated mold;
(c) curing said composition at elevated temperature for a time sufficient to obtain a shaped article with an infusible crosslinked structure; and
(d) optionally post curing the obtained shaped article for about ten hours at a temperature of about 140°C.

15. Electrical articles containing an electrical insulation system according to any one of the claims 1-13, preferably dry-type transformers, particularly cast coils for dry type distribution transformers, especially vacuum cast dry distribution transformers, which within the resin structure contain electrical conductors; high-voltage insulations for indoor use, like breakers or switchgear applications; as long-rod, composite and cap-type insulators, and also for base insulators in the medium-voltage sector, in the production of insulators associated with outdoor power switches, measuring transducers, leadthroughs, and overvoltage protectors, in switchgear constructions, in power switches, and electrical machines, as coating materials for Transistors and other semiconductor elements and/or to impregnate electrical components.

## Patentansprüche

1. Härtbare Epoxidharzzusammensetzung, **dadurch gekennzeichnet, daß** sie folgendes enthält:
(i) mindestens einen Diglycidylether von Bisphenol A (DGEBA) und mindestens einen Diglycidylether von Bisphenol F (DGEBF) als Epoxidharze, wobei das Gewichtsverhältnis von DGEBA : DGEBF im Bereich von etwa 15:85 bis 45:55 liegt;
(ii) einen Anhydridhärter;
(iii) mindestens einen Weichmacher, bei dem es sich um ein Diol, vorzugsweise ein bei Raumtemperatur festes Diol, handelt;
(iv) gegebenenfalls einen Katalysator, mindestens einen Füllstoff und/oder weitere Additive; und
wobei der Wert der dynamischen komplexen Viskosität (η^{*}) der Zusammensetzung im Bereich von 0,1 bis 20 Pa.s, gemessen bei 75°C, 50% Verformung und 1 Hz, liegt.

2. Zusammensetzung nach Anspruch 1, **dadurch gekennzeichnet, daß** das Gewichtsverhältnis von DGEBA : DGEBF im Bereich von etwa 20:80 bis 40:60, vorzugsweise im Bereich von 25:75 bis 35:65, liegt.

3. Zusammensetzung nach Anspruch 1 oder 2, **dadurch gekennzeichnet, daß** die Anhydridhärter aus der Gruppe umfassend Maleinsäureanhydrid; Methyltetrahydrophthalsäureanhydrid; Methyl-4-endomethylentetrahydrophthalsäureanhydrid; Hexahydrophthalsäureanhydrid; Tetrahydrophthalsäureanhydrid; Dodecenylbernsteinsäureanhydrid ausgewählt ist und vorzugsweise Methyltetrahydrophthalsäureanhydrid (MTHPA) ist.

4. Zusammensetzung nach einem der Ansprüche 1-3, **dadurch gekennzeichnet, daß** der Weichmacher aus der Gruppe umfassend aromatische Diole und aliphatische monomere oder polymere Diole, vorzugsweise unter Bisphenol A, Bisphenol F, Polyethylenglykolen, Polypropylenglykolen und Neopentylglykol; vorzugsweise unter Bisphenol A, Bisphenol F und Neopentylglykol oder einer Mischung dieser Verbindungen, vorzugsweise unter Neopentylglykol und Bisphenol A oder einer Mischung dieser Verbindungen, ausgewählt ist.

5. Zusammensetzung nach Anspruch 4, **dadurch gekennzeichnet, daß** der Weichmacher in einer Menge von 5 bis 50 Gew.-%, vorzugsweise 10 bis 45 Gew.-%, bezogen auf das Gewicht der Summe von DGEBA und DGEBF, liegt.

6. Zusammensetzung nach Anspruch 4 oder 5, **dadurch gekennzeichnet, daß** ein aromatisches und ein aliphatisches Diol verwendet werden, wobei deren Gewichtsverhältnis im Bereich von 80:20 bis 20:80 liegt.

7. Zusammensetzung nach einem der Ansprüche 1-6, **dadurch gekennzeichnet, daß** es sich bei dem Katalysator um ein 1-substituiertes Imidazol und/oder N,N-Dimethylbenzylamin, vorzugsweise ein 1-Alkylimidazol, das gegebenenfalls in der 2-Position substituiert ist, vorzugsweise 1-Methylimidazol oder 1-Isopropyl-2-methylimidazol und/oder 1-Methylimidazol handelt.

8. Zusammensetzung nach einem der Ansprüche 1-7, **dadurch gekennzeichnet, daß** der fakultative Katalysator in einer Menge von weniger als 5 Gew.-%, vorzugsweise im Bereich von 0,01 bis 2,5 Gew.-% und vorzugsweise im Bereich von 0,05 bis 1 Gew.-%, bezogen auf das Gesamtgewicht von DGEBA und DGEBF, vorliegt.

9. Zusammensetzung nach einem der Ansprüche 1-8, **dadurch gekennzeichnet, daß** der Wert der dynamischen komplexen Viskosität (η^{*}) der Zusammensetzung im Bereich von 0,2 bis 10 Pa.s, vorzugsweise von 0,5 bis 2,0 Pa.s und vorzugsweise bei etwa 1,0 Pa.s, gemessen bei 75°C, 50% Verformung und 1 Hz, liegt.

10. Zusammensetzung nach einem der Ansprüche 1-9, **dadurch gekennzeichnet, daß** es sich bei dem Füllstoff um einen mineralischen Füllstoff handelt, der vorzugsweise unter Siliciumoxiden, Aluminiumoxiden, Titanoxiden, Silicaten, vorzugsweise Siliciumoxiden (SiO₂, Quarz), Aluminiumoxiden und -hydroxiden, Zinkoxid, Natrium-/Kaliumsilicaten und/oder Siliciumaluminiumsilicaten ausgewählt ist; wobei der Füllstoff gegebenenfalls oberflächenbehandelt ist.

11. Zusammensetzung nach Anspruch 10, **dadurch gekennzeichnet, daß** die Füllstoffverbindung oder die Mischung derartiger Verbindungen eine durchschnittliche Korngröße (mindestens 50% der Körner) im Bereich von 1,0 µm bis 2000 µm, vorzugsweise im Bereich von 5 µm bis 500 µm, vorzugsweise im Bereich von 5 µm bis 100 µm, aufweist und in einer Menge von 50 bis 80 Gew.-%, vorzugsweise von etwa 55 bis etwa 75 Gew.-%, vorzugsweise von etwa 60 bis etwa 70 Gew.-%, bezogen auf das Gesamtgewicht der Isolierzusammensetzung, vorliegt.

12. Zusammensetzung nach einem der Ansprüche 1-11, **dadurch gekennzeichnet, daß** die Zusammensetzung weitere Additive, vorzugsweise hydrophobe Verbindungen, vorzugsweise ein Polysiloxan oder eine Mischung von Polysiloxanen; Elastomere; Pigmente, Farbstoffe oder Stabilisatoren enthält.

13. Zusammensetzung nach einem der Ansprüche 1-11, **dadurch gekennzeichnet, daß** sie folgendes enthält:
| Komponenten: | Gewichtsteile: | Gew.-%: |
|---|---|---|
| DGEBA + DGEBF | 100 | 7,4 - 33,3 |
| Härter | 40 - 120 | 2,9 - 40 |
| Katalysator | 0,01 - 5 | 0,04 - 1,7 |
| Weichmacher | 10 - 45 | 0,4 - 15 |
| Füllstoff | 150 - 1080 | 50 - 80 |
| Fakultative Additive | 0 - 20 | ad 100 |

14. Verfahren zur Herstellung eines Formkörpers unter Verwendung einer Zusammensetzung nach einem der Ansprüche 1-13, bei dem man:
(a) eine härtbare flüssige Epoxidharzzusammensetzung, die (i) mindestens einen Diglycidylether von Bisphenol A (DGEBA) und mindestens einen Diglycidylether von Bisphenol F (DGEBF) als Epoxidharze, wobei das Gewichtsverhältnis von DGEBA : DGEBF im Bereich von etwa 15:85 bis 45:55 liegt; (ii) einen Anhydridhärter; (iii) mindestens einen Weichmacher, bei dem es sich vorzugsweise um ein Diol, vorzugsweise ein bei Raumtemperatur festes Diol, handelt; und (iv) gegebenenfalls einen Katalysator, mindestens einen Füllstoff und/oder weitere Additive; und wobei der Wert der dynamischen komplexen Viskosität (η^{*}) der Zusammensetzung im Bereich von 0,1 bis 20 Pa.s, gemessen bei 75°C, 50% Verformung und 1 Hz, liegt, enthält, vorerhitzt;
(b) die Zusammensetzung in ein vorerhitztes Formwerkzeug überführt;
(c) die Zusammensetzung bei erhöhter Temperatur so lange härtet, bis man einen Formkörper mit einer unschmelzbaren vernetzten Struktur erhält; und
(d) den erhaltenen Formkörper gegebenenfalls etwa zehn Stunden bei einer Temperatur von etwa 140°C nachhärtet.

15. Elektroartikel, enthaltend ein elektrisches Isolationssystem nach einem der Ansprüche 1-13, vorzugsweise Trockentransformatoren, insbesondere vergossene Spulen für Trockenverteilertransformatoren, insbesondere vakuumvergossene Trockenverteilertransformatoren, die in der Harzstruktur elektrische Leiter enthalten; Hochspannungsisolierungen für den Inneneinsatz, wie Unterbrecher oder Schaltanlagenanwendungen; als Langstab-, Verbund- und Kappenisolatoren sowie für Stützisolatoren im Mittelspannungsbereich, bei der Herstellung von Isolatoren bei Freiluft-Leistungsschaltern, Meßwandlern, Durchführungen und Ableitern, im Schaltanlagenbau, in Leistungsschaltern und elektrischen Maschinen, als Beschichtungsmaterialien für Transistoren und andere Halbleiterelemente und/oder zur Imprägnierung von elektrischen Bauteilen.

## Revendications

1. Composition de résine époxy durcissable, **caractérisée en ce que** ladite composition comprend :
(i) au moins un éther diglycidylique de bisphénol A (DGEBA) et au moins un éther diglycidylique de bisphénol F (DGEBF) en tant que résines époxy, le rapport en poids DGEBA:DGEBF étant dans la plage allant d'environ 15:85 à 45:55 ;
(ii) un agent de durcissement anhydride ;
(iii) au moins un plastifiant, ledit plastifiant étant un diol, de préférence un diol qui est solide à température ambiante ;
(iv) éventuellement un catalyseur, au moins un matériau de charge et/ou des additifs supplémentaires ;
la valeur de viscosité dynamique complexe (η*) de ladite composition étant dans la plage allant de 0,1 à 20 Pa·s, mesurée à 75 °C, avec une déformation de 50 % et à 1 Hz.

2. Composition selon la revendication 1, **caractérisée en ce que** le rapport en poids DGEBA:DGEBF est dans la plage allant de 20:80 à 40:60 ; de préférence dans la plage allant de 25:75 à 35:65.

3. Composition selon la revendication 1 ou 2, **caractérisée en ce que** l'agent de durcissement anhydride est choisi dans le groupe comprenant l'anhydride maléique ; l'anhydride méthyltétrahydrophtalique ; l'anhydride méthyl-4-endométhylène tétrahydrophtalique ; l'anhydride hexahydrophtalique ; l'anhydride tétrahydrophtalique ; l'anhydride dodécényle succinique et est de préférence l'anhydride méthyltétrahydrophtalique (MTHPA).

4. Composition selon l'une quelconque des revendications 1 à 3, **caractérisée en ce que** le plastifiant est choisi dans le groupe comprenant les diols aromatiques et les diols aliphatiques monomères ou polymères, de préférence parmi le bisphénol A, le bisphénol F, les polyéthylène glycols, les polypropylène glycols et le néopentyle glycol, de préférence parmi le bisphénol A, le bisphénol F et le néopentyle glycol ou un mélange de ces composés, de préférence parmi le néopentyle glycol et le bisphénol A ou un mélange de ces composés.

5. Composition selon la revendication 4, **caractérisée en ce que** le plastifiant est utilisé en une quantité de 5 % à 50 % en poids, de préférence de 10 % à 45 % en poids, calculée par rapport au poids de la somme de DGEBA et de DGEBF.

6. Composition selon la revendication 4 ou 5, **caractérisée en ce qu'**un diol aromatique et un diol aliphatique sont utilisés, leur rapport en poids étant dans la plage allant de 80:20 à 20:80.

7. Composition selon l'une quelconque des revendications 1 à 6, **caractérisée en ce que** le catalyseur est un imidazole 1-substitué et/ou une N,N-diméthylbenzylamine, de préférence un 1-alkyle imidazole qui est éventuellement substitué à la position 2, de préférence un 1-méthyle imidazole ou un 1-isopropyl-2-méthyle imidazole et/ou un 1-méthyle imidazole.

8. Composition selon l'une quelconque des revendications 1 à 7, **caractérisée en ce que** le catalyseur éventuel est présent en une quantité inférieure à 5 % en poids, de préférence dans la plage allant de 0,01 % à 2,5 % en poids, et de préférence dans la plage allant de 0,05 % à 1 % en poids, calculée par rapport au poids total de DGEBA et DGEBF.

9. Composition selon l'une quelconque des revendications 1 à 8, **caractérisée en ce que** la valeur de viscosité dynamique complexe (η*) de la composition est dans la plage allant de 0,2 à 10 Pa·s, de préférence de 0,5 à 2,0 Pa·s, et de préférence d'environ 1,0 Pa·s, mesurée à 75 °C, avec une déformation de 50 % et à 1 Hz.

10. Composition selon l'une quelconque des revendications 1 à 9, **caractérisée en ce que** la charge est une charge minérale, de préférence choisie parmi les oxydes de silicium, les oxydes d'aluminium, les oxydes de titane, les silicates, de préférence les oxydes de silicium (SiO₂, quartz), les oxydes et les hydroxydes d'aluminium, l'oxyde de zinc, les silicates de sodium/potassium et/ou les aluminosilicates de silicium ; ladite charge étant éventuellement traitée en surface.

11. Composition selon la revendication 10, **caractérisée en ce que** le composé de charge ou le mélange de tels composés a une taille de grain moyenne (au moins 50 % des grains) dans la plage allant de 1,0 µm à 2 000 µm, de préférence dans la plage allant de 5 µm à 500 µm, de préférence dans la plage allant de 5 µm à 100 µm ; et est présent en une quantité de 50 % à 80 % en poids, de préférence d'environ 55 % à environ 75 % en poids, de préférence d'environ 60 % à environ 70 % en poids, calculée par rapport au poids total de la composition d'isolation.

12. Composition selon l'une quelconque des revendications 1 à 11, **caractérisée en ce que** ladite composition contient des additifs supplémentaires, de préférence des composés hydrophobes, de préférence un polysiloxane ou un mélange de polysiloxanes ; des élastomères ; des pigments, des colorants ou des stabilisateurs.

13. Composition selon l'une quelconque des revendications 1 à 11, **caractérisée en ce que** ladite composition contient :
| Composants : | Parties en poids : | % en poids : |
|---|---|---|
| DGEBA + DGEBF | 100 | 7,4 - 33,3 |
| Agent de durcissement | 40 - 120 | 2,9 - 40 |
| Catalyseur | 0,01 - 5 | 0,04 - 1,7 |
| Plastifiant | 10 - 45 | 0,4 - 15 |
| Charge | 150 - 1 080 | 50 - 80 |
| Additifs éventuels | 0 - 20 | Jusqu'à 100 |

14. Procédé de fabrication d'un article façonné utilisant une composition selon l'une quelconque des revendications 1 à 13, qui comprend les étapes de :
(a) préchauffage d'une composition de résine époxy liquide durcissable qui comprend (i) au moins un éther diglycidylique de bisphénol A (DGEBA) et au moins un éther diglycidylique de bisphénol F (DGEBF) en tant que résines époxy, le rapport en poids DGEBA:DGEBF étant dans la plage allant d'environ 15:85 à 45:55 ; (ii) un agent de durcissement anhydride ; (iii) au moins un plastifiant, de préférence un diol, de préférence un diol qui est solide à température ambiante ; et (iv) éventuellement un catalyseur, au moins un matériau de charge et/ou des additifs supplémentaires ; la valeur de viscosité dynamique complexe (η*) de ladite composition étant dans la plage allant de 0,1 à 20 Pa·s, mesurée à 75 °C, avec une déformation de 50 % et à 1 Hz ;
(b) transfert de ladite composition dans un moule préchauffé ;
(c) durcissement de ladite composition à température élevée pendant une durée suffisante pour obtenir un article façonné à structure réticulée infusible ; et
(d) post-durcissement éventuel de l'article façonné obtenu pendant environ dix heures à une température d'environ 140 °C.

15. Articles électriques contenant un système d'isolation électrique selon l'une quelconque des revendications 1 à 13, de préférence des transformateurs de type sec, notamment des bobines moulées pour des transformateurs de distribution de type sec, notamment des transformateurs de distribution secs moulés sous vide, qui contiennent des conducteurs électriques dans la structure de résine ; des isolations haute tension pour utilisation en intérieur, telles que des disjoncteurs ou des applications d'appareillage de connexion ; telles que des isolateurs à long fût, composites et de type à capot, et également pour des isolateurs de base dans le secteur moyenne tension, dans la fabrication d'isolateurs associés avec des interrupteurs extérieurs, des transducteurs de mesure, des traversées et des dispositifs de protection contre les surtensions, dans des constructions d'appareillage de connexion, dans des interrupteurs, et des machines électriques, en tant que matériaux de revêtement pour transistors et autres éléments semiconducteurs et/ou pour imprégner des composants électriques.
